# EUROPEAN PATENT APPLICATION

(11) **EP 2 675 136 A1**
(43) Date of publication of application: **18.12.2013**
(21) Application number: 12171462.0
(22) Date of filing: 11.06.2012
(51) Int. Cl.: H04L 29/08, H04L 29/06

(54) **Method for enabling contact via a virtual communication platform and communication system**

(71) Applicant: Grand City Hotels GmbH, 10719 Berlin (DE)
(72) Inventor: Wishnia, Daniel, Kfar Vradim 25147 (IL); Chachek, Shahar, 10627 Berlin (DE); Ben Davis, Eyal, 14195 Berlin (DE)
(74) Representative: Sokolowski, Fabian

(57) **Abstract**

The invention relates to a method for enabling contact between people of a preselected group via a virtual communication platform provided by a communication system, the method comprising amongst others:
- providing a number of predefined match criteria at the virtual communication platform of which at least one may be selected by each user (I_{A}, I_{B}) after its login to the communication platform;
- automatically matching users (I_{A}, I_{B}) having at least one selected match criterion in common via the virtual communication platform and creating a user match list (23') of users with common selected criteria;
- displaying to every single user (I_{A}, I_{B}) on the user match list (23') and logged in the communication platform the other users (I_{A}, I_{B}) listed in the user match list via a communication device having a user interface and being connected to the communication system; and
- enabling contact between the users (I_{A}, I_{B}) of the match list via the virtual communication platform.

Additionally a corresponding communication system carrying out the method is described.

## Description

### BACKGROUND OF THE INVENTION

The present invention relates to a method for enabling contact between people of a preselected group via a virtual communication platform which is provided by a communication system as well as to a communication system providing such a virtual communication platform. In these modern times several virtual communication platforms are already known. The most popular one being facebook® with hundreds of millions of users. One specific characteristic of these virtual communication platforms is their non-restricted access so that every one connected to the Internet may log in and create his/her own profile. When logged in, the users may contact each other, e.g., by posting text messages or by using via chat rooms. Such virtual communication platforms are, however, not site-specific and are intended to keep a permanent profile of each user which is accessible all the time so that the users can keep their profiles updated and can stay in touch with the other users of the virtual communication platform irrespective of their actual location.

During a business trip or holidays one is, however, usually more interested to just get to know people which are present in the same establishment, e.g., a hotel, so that you can actually meet them. It would thus be favorable to just have a preselected group of people which may be contacted via the virtual communication platform the pre-selection being site-specific so that just people being located in the same establishment or attending the same event may contact each other via the virtual communication platform. To find people being currently at the same establishment via an extremely large and generally open virtual platform like facebook® could be, however, relatively time-consuming and ineffective.

Furthermore, depending on the establishment, guests often request information on activities available nearby like special events, museum tours, shows and the like. It is indeed known that some establishments like hotels or hotel chains offer their guests information on such activities via a communication platform, e.g., being accessible via a TV in every hotel room. However, none of these systems allows for a virtual interaction between the different guests of the respective hotel that are interested in one of the offered activities.

### SUMMARY OF THE INVENTION

An object of the invention is thus to provide an effective technical possibility to promote contacts between people that are guests at the same establishment, e.g., a hotel at which they stay overnight or at which they are just attending a certain event like a seminar or congress, without the necessity of searching for other guests in an open social network.

This objective is accomplished by the method of claim 1 as well as by the communication system of independent claim 12.

The method according to claim 1 for enabling contact between people of a preselected group via a virtual communication platform provided, e.g., hosted, by a communication system comprises the following steps:
- electronically registering guests of a specific establishment in the communication system;
- granting users access to the virtual communication platform provided by an programmable device of the communication system, the access in each case being temporarily and limited to the registered guests of the specific establishment, so that solely users have access to the virtual communication platform during the time they are registered guests at the establishment;
- providing a number of predefined match criteria at the virtual communication platform of which at least one may be selected by each user after its login to the communication platform;
- automatically matching users having at least one selected match criterion in common via the virtual communication platform and creating a user match list of users with common selected criteria;
- displaying to every single user on the user match list and logged in the communication platform the other users listed in the user match list via a communication device having a user interface and being connected to the communication system; and
- enabling contact between the users of the match list via the virtual communication platform.

The method is executed by a programmable device of the communication system such as a computer network server unit. A communication device connected to the communication system may be for example a mobile phone, personal computer (PC), including laptop and tablet computer, or interactive TV.

According to the present invention, access to the virtual communication platform is restricted and limited to guests of a specific establishment, like a hotel, conference center, cruise ship or airplane, so that the virtual communication platform forms a closed system for a preselected group of people. The people having access to the communication platform are thus preselected due to the establishment they are guests of. By selecting at least one of a number of predefined match criteria it is easy for each user to find other users with common interests. An algorithm executed on the programmable device of the communication system matches the users having selected identical match criteria in order to create and expand the match list so that every user logged in to the communication system and the virtual communication platform is automatically provided with a list of users with common match criteria.

The match criteria are preferably predefined to represent different moods. For instance, the match criteria are moods which each user may select by activating a corresponding virtual button when logged in to the communication platform. In such a preferred embodiment, every match criteria which may be selected by a user is thus represented by a virtual button - preferably having a descriptive pictogram - the user may activate in order to be automatically provided with a list of users being guests at the same establishment which have selected the same match criterion. The activating of such a virtual button by a kind of pointer device and/or via a touch screen of a communication device is commonly known and shall thus not be further described herein.

As already indicated above, the method is preferably carried out by an establishment that is an accommodation at which the registered guest can stay overnight, like a hotel or a hotel chain. The method hence enables contact between guests of this hotel or guests of hotels of the hotel chain, wherein the access of the guests to the communication platform is limited to their hotel stay. This means that the guests may only access the virtual communication platform while they are checked in for staying at the hotel overnight or are officially registered as attendant for an event being organized at the hotel.

In alternative embodiments the establishment may also be a different accommodation at which guests are temporarily accommodated like a conference hall / center, a cruise ship or an airplane. According to the invention, it is necessary that the guests that may be granted access to the virtual communication platform have been and preferably still are physically present at a specific real establishment. Therefore, the virtual communication platform for people physically staying at the same establishment creates a possibility to contact each other in a virtual domain.

In an embodiment in which the access to the virtual communication platform is restricted to guests of a hotel or comparable accommodation establishment the access to the virtual communication platform is limited to the time between check-in and check-out of the respective guest. Each guest hence may log in to the communication platform while being electronically registered and recognized as guest by the communication system. In order to ease handling of the corresponding data the communication system preferably is connected to or part of a centralized electronic guest registration management system in which guest data, like name, address, contact details, duration of stay and/or room number are inputted and stored through the staff of the establishment using an associated software.

Preferably, the registration details for each guest, in particular, e.g., an identifier like the real name of the guest, are stored by the communication system but access to them is restricted, so that these registration details are not accessible via the communication platform (at all or at least not by other users). For example, the registration details are solely accessible the guest himself / herself and by the staff of the establishment to identify the guest during his / her stay, e.g., between check-in and check-out.

Details of a user (profile), in contrast thereto, which are retrievable or accessible by other users via the virtual communication platform, are subjected to the exclusive control of the guest and are thus configured so that a variable entry by the respective user is supported. The respective user hence may individually decide which personal information (besides for example a selected match criterion) is visible to other users within the virtual communication platform. User details like a username or other profile data may accordingly entered by the user / guest without the necessity to include personal details like the real name or a photo, which are just optional.

A guest may have also access to the virtual communication platform from outside the respective establishment, for example, via a mobile device, but solely as long as being registered in the communication system providing the virtual communication platform. Before a guest may be granted access to the virtual communication platform the guest has to be registered and its registration has to be still active. The virtual communication platform is thus for example solely accessible for guests actually staying at the same hotel.

In a preferred embodiment of the present invention the method further includes
- providing a list of activity proposals, each of the activity proposals being related to at least one of the match criteria;
- matching users and activity proposals having at least one match criterion in common via the virtual communication platform in order to create an activity match list for every single user; and
- displaying the respectively created activity match list via the communication device to the users logged in to the communication platform.

In this embodiment the communication systems providing the virtual communication platform does consequently not only match users with common match criteria but also matches data sets of an activity proposal to the different users based on at least one of the match criteria. Here, the different activity proposals are tagged with at least one of the match criteria which may be selected by every user of the virtual communication platform so that the respective activity is automatically proposed to a user selecting the corresponding match criterion within the virtual communication platform. Hence, a user immediately receives information on activities he / she is potentially interested in and is provided with further details of it via the virtual communication platform. The matching is done by an algorithm implemented and executed on a programmable device of the communication system, like a computer network server unit.

Preferably, the activity proposals are solely composed of non-virtual activities taking place within a defined spatial radius of the establishment. A user thus may retrieve from the virtual communication platform information on activities going on within the surroundings of the establishment he / she is situated at. For instance there are solely real live activities proposed to him / her which are available in a defined area or (part of) a town the establishment is located in. Therefore, such a communication system allows for bringing together virtual and real live meetings so that guests of a specific establishment may firstly virtually meet and are then directed to real-life activities they may attend in person. Since the activities on the list of activity proposals are also categorized based on the match criteria which the users may select in order to identify there current mood or status solely activities are automatically proposed to each user for which it is highly likely that the user is interested in them.

The list of activity proposals and/or the user match list are preferably ordered by relevancy. The more match criteria the users or an activity and the user, respectively have in common the higher they are ranked in the respective list. In case a user does not select any match criterion for the virtual communication platform via his / her user interface the communication systems is configured to show the respective user a list of all activities available and/or a list of all users available, respectively.

In order to not only show each user the different activities and provide the users with further information on each activity but also to allow each user to apply for an activity or indicate his / her attendance it is provided for a flag handling for each activity proposal and each user in one preferred embodiment of the invention. By means of this flag handling it is possible for each user, when logged in to the virtual communication platform, to set a (virtual) flag, i.e., status variable, in order to indicate via the virtual communication platform that the user applied for the respective activity or intends to attend the respective activity. Consequently, it may be determined via the virtual communication platform and the associated communication system how many users /guests applied for each activity. This allows the establishment running the virtual communication platform to effectively organize the respective activities and / or evaluate the degree of popularity of each activity proposed via the virtual communication platform.

Furthermore, buying real and/or virtual goods via the virtual communication platform may be also possible. For example, it may be possible for each user to buy a ticket for a tour (of an activity proposed to the user via the virtual communication platform), a drink and/or meal in a bar or restaurant (of the establishment) and/or a virtual gift card (which may be also send directly to another user via the virtual communication platform).

In this context, it is also regarded advantageous that the communication system enables financial transactions via the virtual communication platform. Therefore, a secure transmittal of credit card or bank account details may be provided by the communication system. Additionally or in the alternative payment may be carried out when the guest is deregistered, e.g., checks out from the establishment. Consequently, the communication systems stores data on the goods booked / bought via the virtual communication platform, so that a guest may pay those when he / she has finished his / her stay at the establishment,

In this context, it is furthermore preferred that the communication platform may be also accessed by a staff member of the establishment. Therewith, a staff member can broadcast information over the virtual communication platform to the users, receive instant (live) feedback from the users and / or communicate with the users (in a way the users may also communicate with each other, e.g., by participating in or opening a chat). The establishment running the virtual communication platform thus may receive more reliable information on the degree of popularity of certain offered activities and the interests of its customers.

As regards enabling contact between the different users of the virtual communication platform it is preferred that the communication system enables instant messaging, sharing of text, images, video and Internet links and / or VolP (Voice over IP) calls via the virtual communication platform. Further options would include sharing geographical positions of each user so that each user may receive information from the other users where they are actually situated. For instance, each user may post his / her position within the establishment or in the town the establishment is located when the user is currently not in the establishment.

In one embodiment the communication system allows for VPN tunneling (Virtual Private Network tunneling) so that the virtual communication platform may be accessed from outside the establishment in a secure way.

According to the invention it is furthermore provided for a communication system providing a virtual communication platform by means of which users of our preselected group of people may communicate with each other, the communication system comprising at least one programmable device, like a computer network server unit, by means of which:
- guests of a specific establishment electronically may be registered in the communication system;
- the virtual communication platform is provided in such a way that it may be accessed via several communication devices connected to the communication system;
- users may be granted access to the virtual communication platform, the access in each case being temporarily and limited to the registered guests of the specific establishment, so that solely users are granted access to the virtual communication platform during the time the programmable device has registered them as guests located at the establishment;
- a number of predefined match criteria at the virtual communication platform is provided of which match criteria at least one may be selected by each user after its login to the communication platform;
- users having at least one selected match criterion in common are automatically matched via the virtual communication platform;
- a user match list of users with common selected criteria is automatically created;
- to every single user on the user match list and logged in at the communication platform the other users listed in the user match list are displayed via a communication device having a user interface and being connected to the communication system; and
- contact between the users of the match list is enabled via the virtual communication platform.

Preferably, the communication system is part of a computer system (computer network) and an accommodation at which the registered guest can stay overnight, like a hotel. Other possible establishments may be conference halls, cruise ships, aircrafts, etc., where several people are physically located and thus may be registered as guests of the respective establishment.

Preferably, the communication system is configured to (permanently) store user profile data users inputted to create a virtual profile for the virtual communication platform. In one embodiment the profile data is even stored during the time a guest is no longer registered at the establishment in order to make the profile data again accessible for the respective guest the next time he / she is registered at the establishment. With respect to an establishment in the form of a hotel or hotel chain this means that a guest could create his / her own virtual profile and has access to the virtual communication platform during his / her stay at the hotel (of the hotel chain), i.e., form check-in until check-out, the access hence being temporarily. After having checked out the guest is no longer registered and has thus no longer access to the virtual communication platform. The profile data of the respective guest, however, is stored by the communication system so that the guest may use the same virtual profile the next time he / she checks in to the same hotel or another hotel of the same hotel chain.

It is to be noted that a communication system according to the invention is preferably configured to carry out the method according to the invention and thus features and advantages of the method also apply for the communication system and vice versa.

### BRIEF DESCRIPTION OF THE DRAWINGS

In the accompanying drawings, like reference numerals are used to denote like parts throughout the different figures, wherein:
- Fig. 1: shows a schematic overview of different hotels of a specific area in a town interlinked with each other in order to form a single establishment for which a virtual communication platform is provided;
- Fig. 2: schematically shows matching two different users by a match criterion both user selected and further matching each of the user with an activity proposal being virtually tagged with a match criterion both users have selected;
- Fig. 3A-3F: generally show the composition of the different components of the virtual communication platform displayed to and accessible by each user;
- Fig. 4A, 4B and 4C: show a virtual interface of the virtual communication platform according to a first embodiment in which different items of a main menu bar are respectively selected;
- Fig. 5: shows a modified user interface according to a second embodiment based on Figure 4A.

### DESCRIPTION OF THE PREFERRED EMBODIMENTS

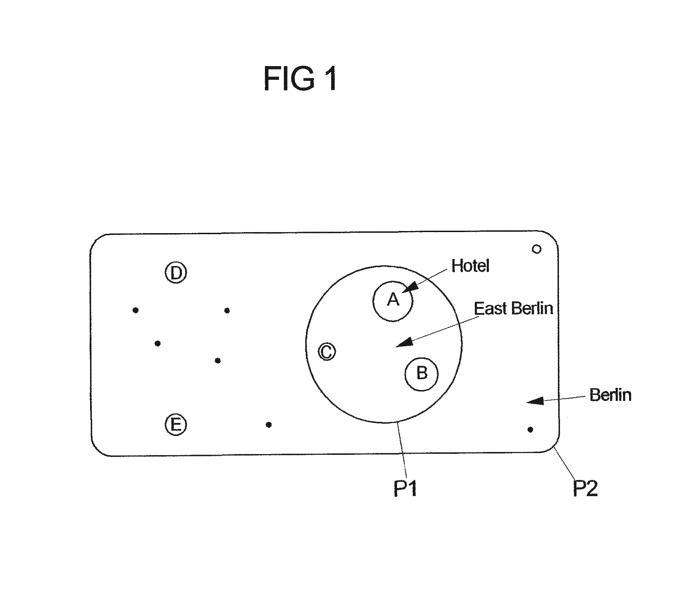

Figure 1 schematically shows different locations A, B, C, D, E of hotels within a town. All the hotels shown are members of a certain hotel chain and thus form an "establishment" within the meaning of the claims at which guests may stay overnight and hence are registered when they check in. The different hotels at the locations A to E are assigned to a spatial area P2 within the geographical borders of the town. A smaller area P1 represents for example the inner city of the town. The hotels at the locations A to C associated with this smaller inner area P1 and belonging to the same hotel chain may also form an "establishment" within the meaning of the present invention. A (network) communication system is provided which guests of the hotels at the locations A to C or A to E may have access to during their stay at the hotels. In this way, access to a virtual communication platform is just temporarily granted to people that already have one thing in common: They are already registered in and thus identified by a communication system that forms a part of a computer system at these hotels.

The basic idea of the present embodiment according to the invention is the communication system to provide, e.g., host, a virtual communication platform by means of which the guests of the different hotels at the locations A to C or A to E may contact each other during their stay at the respective hotels without the necessity to previously know the other guests or accessing an external social network. The virtual communication platform forms a closed communication network environment which is solely accessible by guests of a hotel or a number of specific hotels during their stay there.

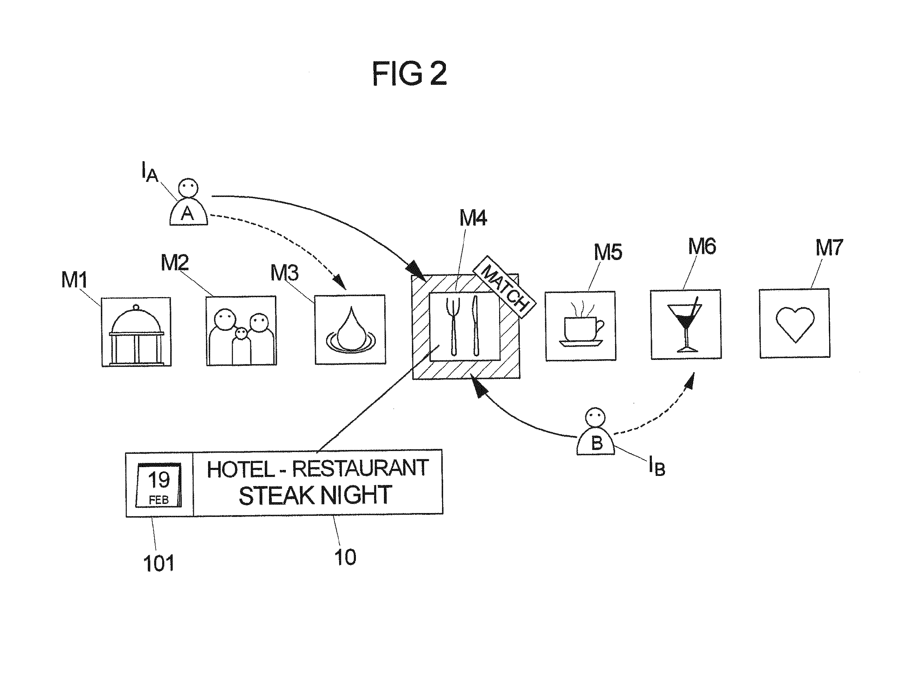

In order to ease establishment of contacts and to promote real and virtual interactions the communication system uses a number of predefined match criteria at least one of which a user logged in to the virtual communication platform has to select in order to activate execution of a matching algorithm at programmable device of the communication system like a computer network server unit. In the present case the match criteria represent different moods that are illustrated by pictograms within the virtual communication platform. The pictograms being associated with virtual buttons in a graphical user interface of the communication systems, for example displayed a mobile communication device, like a mobile phone or laptop computer. By selecting one or several of these match criteria the communication system runs the matching algorithm for matching users with commonly selected match criteria in order to create and update a user match list in which currently registered users with at least one match criterion in common are stored. Figure 2 exemplary illustrates two individual users I_{A}, I_{B} logged in to the virtual communication platform that have been matched due to a match criterion selected by both users I_{A}, I_{B}. In the present case each user may select one or several of seven different moods as match criteria each represented in the virtual communication platform by a pictogram M1 to M7. Each descriptive pictogram here represents for example a mood or interest like, "Drink", "Food", "Party", "Family", "Business", "Love", "Wellness" or "Tourism".

The individual users I_{A}, I_{B} of Figure 2, for example, selected mood M3, M4 and M4, M6, respectively in which the pictogram M3 represents "Wellness", pictogram M4 represents "Food" and pictogram M6 represents "Party". Since the two users I_{A}, I_{B} both selected the pictogram M4 via the user interface of their corresponding communication device, such as a mobile phone, computer or interactive TV (installed in each hotel room) the communication system matches the two users I_{A}, I_{B} and sorts them in a user match list, herein afterwards also referred to as "mood match list". Users on a user match list are then notified of each other via the virtual communication platform. In this way, both users I_{A}, I_{B} can easily contact each other via the virtual communication platform since they have at least one match criterion in common and it is likely that they not only share the same hotel but also are interested spending time together.

To further improve the functionality of the virtual communication platform and to promote a real-life contact between individual users the virtual communication platform here also matches individual users I_{A}, I_{B} with specific activities based on different matching criteria. Therefore, the communication system providing the virtual communication platform also includes a database in which different actual activities are stored and tagged with at least one of the predefined (mood) match criteria. On the virtual communication platform an activity proposal 10 is then displayed to each user having selected a match criterion that is also tagged to this activity. The activity proposal 10 to each user I_{A}, I_{B} is also including activity data 100 such as time, location, number of participants and / or price.

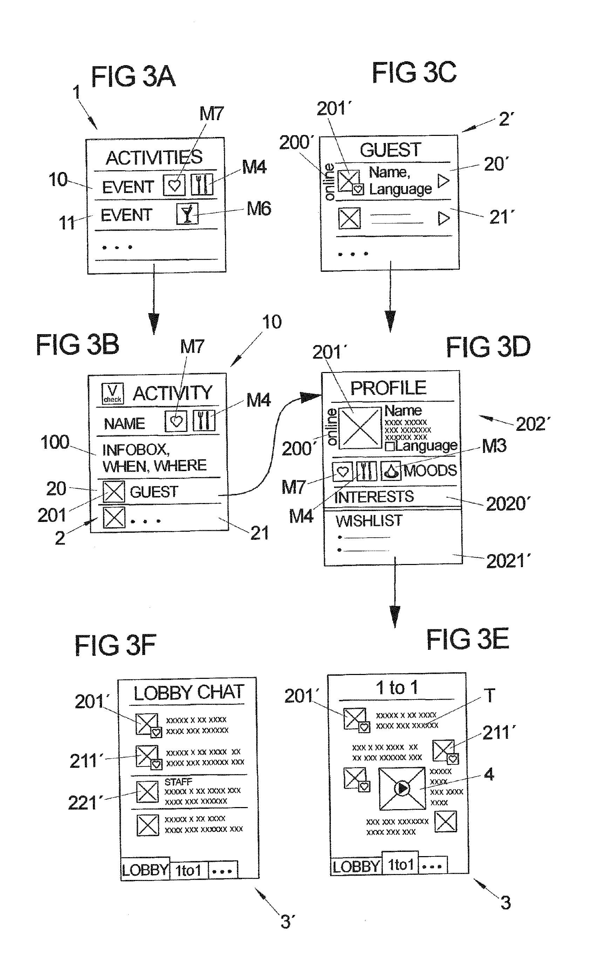

Figures 3A to 3F schematically show different layouts of a graphical user interface of the virtual communication platform depending on the input of the respective user.

In Figure 3A an activity match list 1 is illustrated in which several activity proposals 10, 11 are shown that are matched via the different match criteria by a corresponding algorithm which is executed by a programmable device of the communication system. The different activity proposals 10, 11 inform a user of specific events nearby. The activity proposals 10, 11 are virtually tagged by the establishment the user is staying in, e.g., by his / her hotel, with a "mood". Each activity proposal 10, 11 is hence categorized so that is corresponds to at least one "mood" that may be selected by a user.

If a user wants more information about a specific activity proposal 10, 11, he/she may click on it, so that the information window shown in Figure 3B is displayed. This information window not only includes activity data details 100 such as date, location and/or price, but also a list of participants 2. This list of participants 2 consists of several participant indicator fields 20, 21 in each of which a brief information on a respective participant is given. This information in the participant indicator field 20, 21 is based on data the respective user entered via the virtual communication system and also includes an avatar picture.

In case a user wants more detailed information on the participants which naturally are also guests of the same establishment, it is possible to switch to a screen (for example by opening a window) on the virtual communication platform as illustrated in Figure 3C. Figure 3C shows an expanded list of participants 2' which is composed of expanded participant indicator fields 20', 21' comprising more detailed profile data 202' of each participant, an avatar picture 201' with the match criteria selected by the respective participant and a status field 200' indicating the current status (offline/online) of the respective participant.

By clicking on a participant in this expanded list of participants 2' a window according to Figure 3D may be opened in which not only the profile data 202' is displayed, but also a list of interests 2020' (when completed by the respective participant/user) and an expanded activity match list - herein also referred to as "wishlist" - 2021' listing activities tagged with at least one identical match criterion or the respective displayed user intends to attend and/or already attended to. Via the virtual communication platform each user may thus retrieve basic information on other guests of the same establishment and in particular on other guests that obviously share a common mood or interest. Here, the selected "moods" are used by the communication system as match criteria in order to match the different users that are registered guests at the same establishment and have at least once logged in to the virtual communication platform.

To contact another user the virtual communication platform allows for instant messaging via a messaging interface 3 according to Figure 3E in which text messages T exchanged between two users are listed in chronological order. The origin of each text message is identified by an avatar picture 201', 211' of the respective user. Via the messaging interface 3 shown in Figure 3E it is also possible to share video, images, geolocation data (indicating the geographic location of the user and/or the communication device he / she is currently using) or links as indicated by reference numeral 4 in Figure 3E.

In addition to a 1:1 communication between two users, the communication platform also provides for the possibility to chat with several users at the same time. Such is illustrated by the chat interface 3' of Figure 3F in which a chat of several users each identified by their avatar pictures 201', 211' and a staff member of the establishment identified by a further avatar picture 221' is schematically illustrated.

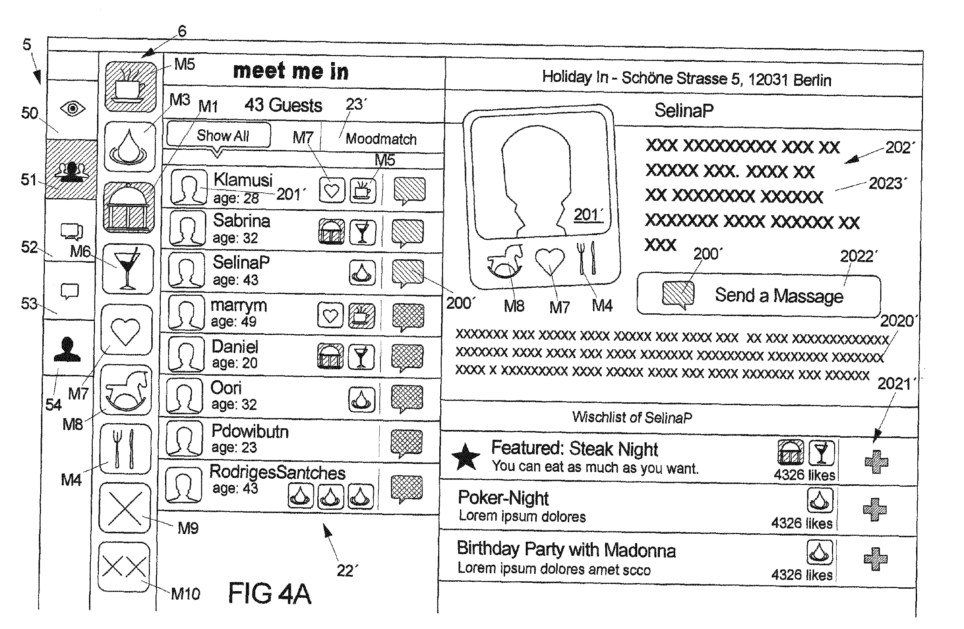

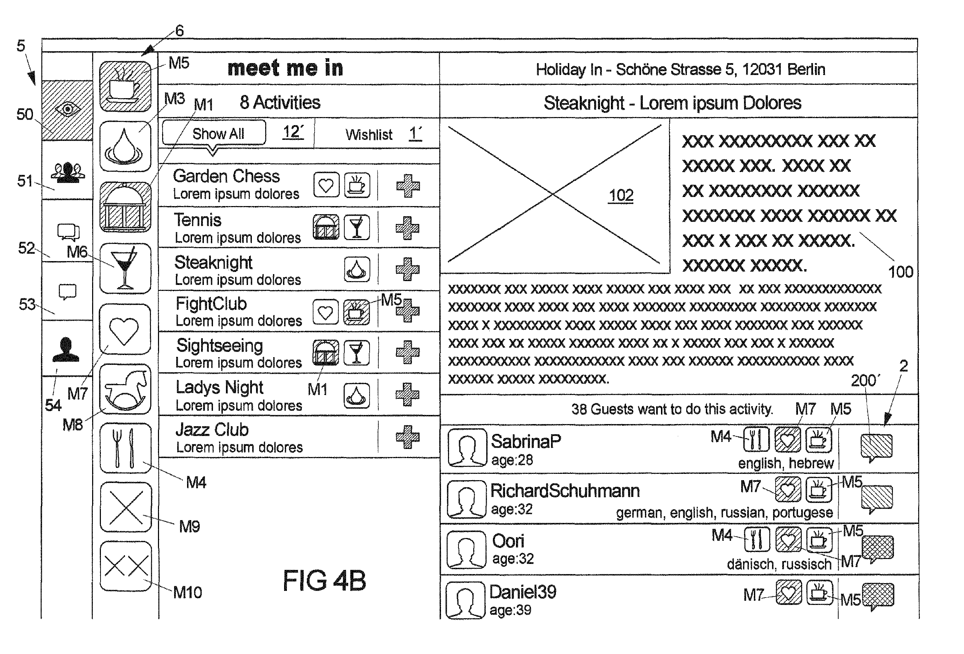

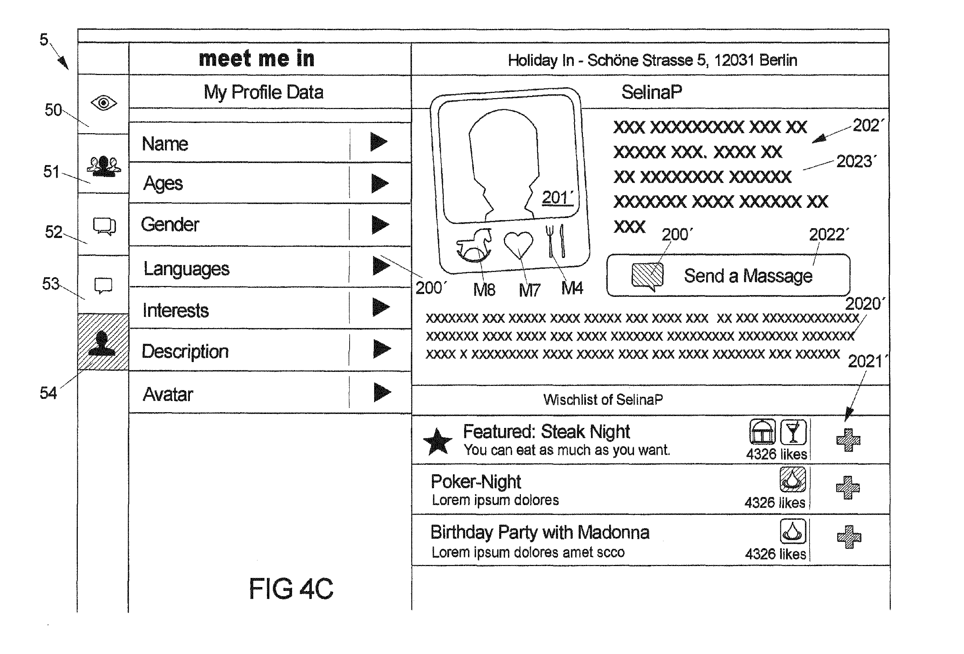

A preferred layout of a user interface for a virtual communication platform according to the invention is schematically shown in Figures 4A, 4B and 4C.

After logging in to the virtual communication platform via a communication device such as a personal computer, mobile phone, tablet PC or interactive TV, a user may select between different windows by selecting one of several icons 50 to 54, of which in Figures 4A, 4B and 4C icon 51, 50 or 54 is respectively selected in order to display the corresponding layout (icon 52 opening a chat and icon 53 opening a messaging window for 1:1 conversation).

Of particular interest is a mood selector bar 6 at which a number of predefined match criteria each represented by a pictogram M5, M3, M1, M6, M7, M8, M4, M9, M10 are selectable. Depending on the selected pictograms (on virtual buttons) a user match list ("mood match" list) 23' is computed and may by selected by the user in order to show the user filtered from a guest list 22' with all registered guests that also selected at least one identical "mood" (match criterion). Note that in Figure 4A icon 51 (to get information on other guests / users) and the guest list 22' is activated and hence all user are displayed. When activating the user match list 23', which is also available in this window, solely user would be shown that selected the same "moods" represented by pictograms M5 and M1.

In addition to the main menu bar 5, the mood selector bar 6, the guest list 22' and the user match list 23' an additional portion of the user interface is dedicated to show the profile data 202' of a user selected from the guest list 22'. In addition to the buttons and fields explained in connection with Figures 3C and 3B, the user interface in Figures 4B and 4C furthermore includes an additional personal message field 2023' and a communication button 2022'. The personal message in the personal message field 2023' is visible for every user and could contain a brief invitation to others to contact the respective user. Via the communication button 2022' a text message may be sent to the user and/or a chat may be initiated.

Figure 4B shows the user interface in case icon 50 of the main menu bar 5 has been activated. This icon opens windows related to activities offered at and/or by the establishment and/or in a defined spatial radius around the establishment, such as garden chess, tennis, a "steak-night", sightseeing tours, operas, theatre performances, etc all displayed in a (general) activity list 12'. Due to the match criteria selected via the mood selector bar 6, the list of all possible activities 12' may be filtered, so that only matching activities are listed in an activity match list ("wishlist") 1'. In this "wishlist" 1' only activities are listed that were previously tagged with at least one of the selected "moods" by the staff. In addition to the aforementioned Figures 3A and 3B, Figure 4B illustrates that an activity proposal 10 in this embodiment may also include a descriptive picture 102 of the respective activity.

The (expanded) activity match list 1, 1', 2021' and the user match list 23' are furthermore preferably ordered by relevancy. The more match criteria are identical the higher the respective activity proposal 10, 11 or user are ranked in the respective list.

In case a user does not select any match criterion for the virtual communication platform the communication systems is configured to show the respective user solely the activity list 12' of all activities available and the guest list 22' of all users available.

Figure 4C shows the user interface when icon 54 is selected opening an input mask via which profile data for the user logged in may be inputted. Details of a user, i.e., his / her profile data, are subjected to the exclusive control of the guest. Thus, the communication platform is configured in such a way that a variable entry of profile data by the respective user is supported. The individual user hence may decide which personal information is visible to other users within the virtual communication platform. User details like a username or other profile data may accordingly entered by the user without the necessity to expose his / her real name or a photo.

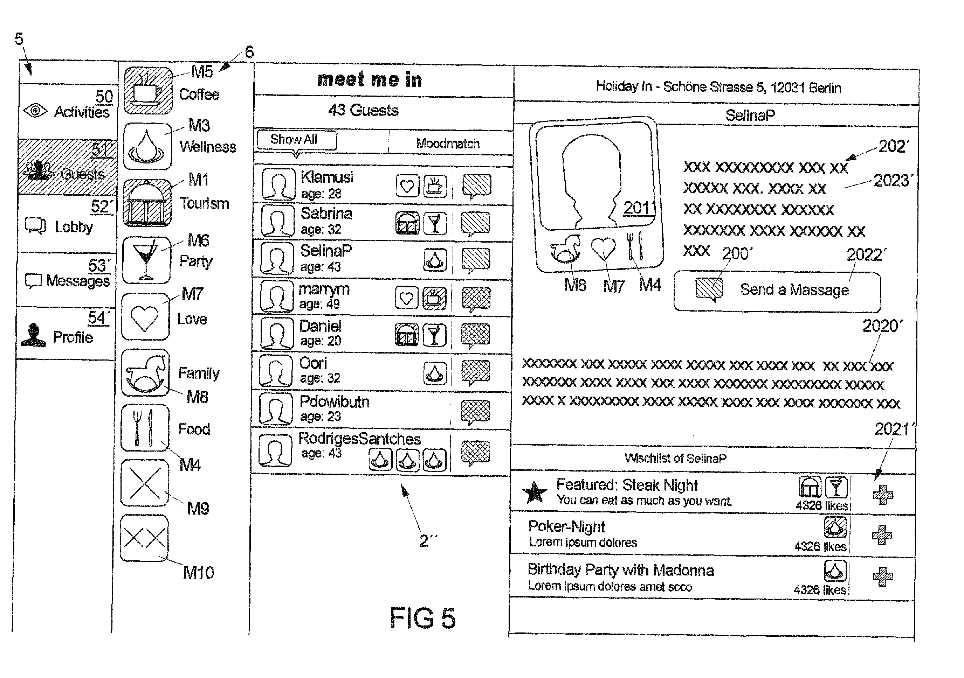

In Figure 5 a modified user interface is shown which, for instance, may be applied for a different operating system or a different communication device. In this modified user interface, a main menu bar 5' and a mood selector bar 6' are provided in which the respective icons and buttons are labelled to further ease navigation and intuitive use of the graphical user interface.

The communication system and method described is used in a hotel (of a hotel chain) and accessible for all current guests of the hotel, but, for instance, may also be used exclusively by guests of a certain event organized there, such as a conference, a concert, a wedding or the like.

With the present embodiment according to the invention it is possible to bring together virtual and real-life meetings and to transform a specific establishment in which people physically stay into a digital (closed) social platform. By selecting match criteria which are here identified as "moods", the different guests of the establishment are matched with each other and also with different activities that are also tagged with at least one of the moods that can be selected. By a matching algorithm executed on a programmable device of the communication system providing the virtual communication platform, similarities between the different users are highlighted based on the selected "moods" (matching criteria). Visual indicators on a graphical user interface notify each user of such matches which are updated in real time. The different users can thereby interact virtually and also in real life by attending the same activities to which they are invited (by the establishment and/or other users) via the virtual communication platform. In this context, it is also possible to directly contact other users by initiating a chat or writing an instant message via the virtual communication platform.

Furthermore, buying real and/or virtual goods via the virtual communication platform is also possible. For example, each user I_{A}, I_{B} may buy a ticket for a corresponding activity proposed to him via the virtual communication platform, a drink and/or a meal in a bar or restaurant of the hotel and/or a virtual gift card, which may be send directly to another user via the virtual communication platform.

The communication system enables financial transactions via the virtual communication platform. Therefore, a secure transmittal of credit card or bank account details is provided by the communication system. Additionally payment may be carried out when the guest is deregistered, e.g., checks out from the hotel. Consequently, the communication systems stores data on the goods booked / bought via the virtual communication platform, so that a guest may pay those at a reception of the hotel when he / she checks out.

In addition, it is possible to rate previous activities a user attended to, to store these rates and make them available to other users, so that one may benefit from the feedback and experiences of other users.

Such feedback is also favourable for the establishment running such a virtual communication platform since it allows evaluating popularity, actual demand and success of an event organized or offered by the establishment. In particular with regard to the hotel industry, such a communication system and communication method is extremely advantageous and intuitively to handle.

Furthermore, not only guests of such an establishment may use the present communication system and method but also the staff. Accordingly staff members may broadcast important information (e.g., related to events) in a very sophisticated way and receive instant feedback from their guests. In this way, it is also easily possible to directly engage with the guest interested in their services and receive detailed insights about the guests in an establishment in real time. Preferably, a software analytics tool for the staff is implemented in the communication system in order to evaluate for example demands, number of participants or ratings for certain offered events.

Preferably, the communication system is configured to be a cross platform application which works on different operating systems, such as iOS®, Android® and Windows® and is thus also accessible by different communication devices, such as mobile phones, interactive TV's (having network and/or internet connection capabilities), and personal computers including laptops and tablet computers.

### REFERENCE NUMERALS

- 1, 1': activity match list
- 10, 11: activity proposal
- 12': activity list
- 100: activity data
- 102: activity picture
- 2: list of participants
- 20, 20': participant indicator field
- 200': status field
- 201, 201', 211': avatar picture (user)
- 202': profile data
- 2020': list of interests
- 2021': expanded activity match list
- 2022': communication button
- 2023': personal message
- 21': participant indicator field
- 22': guest list
- 221': avatar picture (staff member)
- 23': user match list
- 3: messaging interface
- 3': chat interface
- 4: video link
- 5, 5': main menu bar
- 50 - 54: icon
- 6, 6': mood selector bar
- 7: input mask
- A - E: location
- I_{A}, I_{B}: user
- M1 - M10: pictogram each representing a match criterion ("mood")
- P1, P2: area
- T: text message

## Claims

1. Method for enabling contact between people of a preselected group via a virtual communication platform provided by a communication system, the method comprising the steps:
- electronically registering guests of a specific establishment in the communication system;
- granting users (I_{A}, I_{B}) access to the virtual communication platform provided by an programmable device of the communication system, the access in each case being temporarily and limited to the registered guests of the specific establishment, so that solely users have access to the virtual communication platform during the time they are registered guests at the establishment;
- providing a number of predefined match criteria at the virtual communication platform of which at least one may be selected by each user (I_{A}, I_{B}) after its login to the communication platform;
- automatically matching users (I_{A}, I_{B}) having at least one selected match criterion in common via the virtual communication platform and creating a user match list (23') of users with common selected criteria;
- displaying to every single user (I_{A}, I_{B}) on the user match list (23') and logged in the communication platform the other users (I_{A}, I_{B}) listed in the user match list via a communication device having a user interface and being connected to the communication system; and
- enabling contact between the users (I_{A}, I_{B}) of the match list via the virtual communication platform.

2. Method according to claim 1, wherein the establishment is an accommodation at which the registered guests can stay overnight.

3. Method according to claim 2, wherein the establishment is a hotel or a hotel chain and the communication system enables contact between guests of this hotel or guests of hotels of the hotel chain, the access of the guests to the communication platform being limited to their hotel stay.

4. Method according to one of the claims 1 to 3, wherein the method further includes:
- providing a list of activity proposals (10, 11), each of the activity proposals (10, 11) being related to at least one of the match criteria;
- matching users (I_{A}, I_{B}) and activity proposals (10, 11) having at least one match criterion in common via the virtual communication platform in order to create an activity match list for every single user (I_{A}, I_{B}); and
- displaying the respectively created activity match list (1) via the communication device to the users (I_{A}, I_{B}) logged in to the communication platform.

5. Method according to claim 4, wherein the activity proposals (10, 11) are solely composed of non-virtual activities taking place within a defined spatial radius of the establishment.

6. Method according to claim 5, wherein the method further includes providing a flag handling for each activity proposal (10, 11) and each user (I_{A}, I_{B}) in order to allow each user (I_{A}, I_{B}) applying for an activity via the communication platform and for determining how many users applied for each activity.

7. Method according to claim 6, wherein the number of users applied for every activity in the list of activity proposals are displayed to every user (I_{A}, I_{B}) logged in to the communication platform.

8. Method according to any one of the preceding claims, wherein several match criteria may be selected by each user (I_{A}, I_{B}).

9. Method according to any one of the preceding claims, wherein the communication platform may be also accessed by a staff member of the establishment.

10. Method according to claim 9, wherein a staff member can broadcast information over the communication platform to the users (I_{A}, I_{B}) and receive instant feedback.

11. Method according to any one of the preceding claims, wherein the communication platform allows for instant messaging, sharing of text, images, geolocation data, video and Internet links (4) between users (I_{A}, I_{B}) and/or VolP calls.

12. Communication system providing a virtual communication platform by means of which users of a preselected group of people may communicate with each other, the communication system comprising at least one programmable device by means of which:
- guests of a specific establishment electronically may be registered in the communication system;
- the virtual communication platform is provided in such a way that it may be accessed via several communication devices connected to the communication system;
- users (I_{A}, I_{B}) may be granted access to the virtual communication platform, the access in each case being temporarily and limited to the registered guests of the specific establishment, so that solely users (I_{A}, I_{B}) are granted access to the virtual communication platform during the time the programmable device has registered them as guests located at the establishment;
- a number of predefined match criteria at the virtual communication platform is provided of which match criteria at least one may be selected by each user (I_{A}, I_{B}) after its login to the communication platform;
- users (I_{A}, I_{B}) having at least one selected match criterion in common are automatically matched via the virtual communication platform;
- a user match list (23') of users (I_{A}, I_{B}) with common selected criteria is automatically created;
- to every single user (I_{A}, I_{B}) on the user match list (23') and logged in at the communication platform the other users (I_{A}, I_{B}) listed in the user match list (23') are displayed via a communication device having a user interface and being connected to the communication system; and
- contact between the users (I_{A}, I_{B}) of the match list (23') is enabled via the virtual communication platform.

13. Communication system according to claim 12, wherein the communication system is part of a computer system at an accommodation at which the registered guests can stay overnight.

14. Communication system according to claim 13, wherein the communication system is part of a computer system at a hotel and the communication system enables contact between guests of this hotel or guests of hotels of a hotel chain this hotel is a member of, and the programmable device is configured to grant access to the communication platform to the guests staying at the hotel.

15. Communication system according to any one of the claims 12 to 14, wherein the communication system is configured to carry out the method according to one of the claims 1 to 11.
